# EUROPÄISCHE PATENTANMELDUNG

(11) **EP 2 103 788 A2**
(43) Veröffentlichungstag der Anmeldung: **23.09.2009**
(21) Anmeldenummer: 09100058.8
(22) Anmeldetag: 22.01.2009
(51) Int. Cl.: F01N 3/20, B01D 53/94, C01C 1/02

(54) **Vorrichtung und Verfahren zur thermodynamischen und druckaufbauenden Freisetzung von Ammoniak**

(30) Priorität: 17.03.2008 DE 102008000694
(71) Anmelder: Robert Bosch GmbH, 70442 Stuttgart (DE)
(72) Erfinder: Kaefer, Sebastian, 70197, Stuttgart (DE)

(57) **Zusammenfassung**

Die Erfindung betrifft eine Vorrichtung (10) zur thermodynamischen und druckaufbauenden Freisetzung von Ammoniak aus einer Ammoniak speichernden Substanz (12), bei welcher der Ammoniakdruck höher ist als ein Abgasdruck eines Abgassystems, insbesondere einer Verbrennungskraftmaschine, in welches das Ammoniak dosiert einzubringen ist. Es ist vorgesehen, dass Mittel zur Vergleichmäßigung des Ammoniakdrucks gegeben sind. Ferner betrifft die Erfindung ein entsprechendes Verfahren.

## Beschreibung

Die Erfindung betrifft eine Vorrichtung zur thermodynamischen und druckaufbauenden Freisetzung von Ammoniak mit den im Oberbegriff des Anspruchs 1 genannten Merkmalen einerseits und ein entsprechendes Verfahren zur thermodynamischen und druckaufbauenden Freisetzung von Ammoniak mit den im Oberbegriff des Anspruchs 10 genannten Merkmalen andererseits.

### Stand der Technik

Eine Vorrichtung und ein Verfahren zur thermodynamischen und druckaufbauenden Freisetzung von Ammoniak der eingangs genannten Art sind aus der internationalen Offenlegungsschrift WO 1999/01205 A1 bekannt. Darin wird insbesondere ein Verfahren sowie eine Vorrichtung zur selektiven katalytischen NOx-Reduktion in sauerstoffhaltigen Abgasen unter Verwendung von Ammoniak und einem Reduktionskatalysator vorgeschlagen, wonach gasförmiger Ammoniak über ein Dosierorgan in einem Abgassystem zur Verfügung gestellt wird durch Aufheizung eines festen Speichermediums, das in einen Behälter eingebracht ist. Hierbei kann das Speichermedium Ammoniak entweder durch Adsorption oder in Form eines chemischen Komplexes binden, wobei das Speichermedium ein oder mehrere Salze, insbesondere Chloride und/oder Sulfate eines oder mehrerer Erdalkalimetalle und/oder eines oder mehrerer 3d-Nebengruppenelemente, vorzugsweise Mangan, Eisen, Kobalt, Nickel, Kupfer und/oder Zink, enthält.

Das Verfahren und die Vorrichtung eignen sich dabei in besonderer Weise als Systembestandteile zur Verwendung in Kraftfahrzeugen, wobei durch Wärmeeinwirkung aus einer geeigneten Substanz Ammoniak freigesetzt und für einen Dosiervorgang ein Ammoniakdruck aufgebaut wird, der über dem Druck des Abgassystems liegt, in welches das Ammoniak eingebracht wird. Charakteristisch ist hierbei, dass zwischen dem Zeitpunkt der Energieeinbringung und dem Zeitpunkt der damit korrespondierenden Ammoniakfreisetzung ein Zeitraum von bis zu mehreren hundert Sekunden verstreichen kann. Grund hierfür ist die spezifische Wärmekapazität und die begrenzte Wärmeleitfähigkeit betroffener Systembauteile sowie der Substanz selbst. Der zeitliche Versatz führt im dynamischen Betrieb dazu, dass die Ammoniak-Freisetzungsrate nicht immer dem momentanen Bedarf entspricht. Dies hat zur Folge, dass sich der Systemdruck ändert. Mit veränderlichem Systemdruck ändert sich allerdings auch die Charakteristik des Dosierorgans. Des Weiteren ist nach längerem Systembetrieb bei anhaltender Hochdosierung zu beobachten, dass eine hohe Energiemenge im System akkumuliert wird, um die benötigte Ammoniak-Freisetzungsraten darstellen zu können. Wird nach einer Hochdosierphase die Dosierung gestoppt, so wird weiterhin eine hohe Menge Ammoniak erzeugt, infolgedessen sich ein hoher Druck aufbaut, der unter dem Gesichtspunkt der Sicherheit ab einer gewissen Schwelle als kritisch einzustufen ist. Demnach ist bei der vorgenannten Vorrichtung und bei dem vorgenannten Verfahren nachteilig, dass bei der Erzeugung von Ammoniak Druckspitzen respektive Druckschwankungen entstehen können, was zu einer erschwerten Handhabung führt.

### Offenbarung der Erfindung

Die erfindungsgemäße Vorrichtung zur thermodynamischen und druckaufbauenden Freisetzung von Ammoniak aus einer Ammoniak speichernden Substanz mit den im Anspruch 1 genannten Merkmalen bietet demgegenüber den Vorteil, dass Druckspitzen vermindert und Druckschwankungen abgebaut werden, was zu einer erhöhten Dosiergenauigkeit und zu einem vereinfachten sicherheitstechnischen Konzept des Systems führt. Dabei kommen Mittel zur Vergleichmäßigung des Ammoniakdrucks zum Einsatz. Besagte Mittel zur Druckvergleichmäßigung erlauben eine Vereinfachung einer damit zusammenhängenden Regelung und Überwachung des Gesamtsystems, da der Druck nicht durch ein genau an den NH3-Bedarf angepasstes Heizen auf einem bestimmten Niveau gehalten werden muss, sondern ein zyklisches Zuheizen nach einem vereinfachten Ein-Aus-Schema möglich wird, bei dem eine größere und weniger eng spezifizierte Menge Ammoniak freigesetzt werden kann.

Letztlich ist es möglich, den Maximaldruck oder den Betriebsdruck unabhängig von der Freisetzungs- und Dosierrate auf einen konstanten oberen Wert zu begrenzen, wodurch ein Regelungs- und Überwachungsaufwand des Systems verringert und eine präzisere Dosierung des Ammoniaks ermöglicht wird.

Gleiches gilt in analoger Weise für das Verfahren zur thermodynamischen und druckaufbauenden Freisetzung von Ammoniak aus einer Ammoniak speichernden Substanz mit den Merkmalen des Anspruchs 10.

Vorteilhafte Weiterbildungen ergeben sich durch die Merkmale der abhängigen Ansprüche.

In einer vorteilhaften Ausgestaltung der Erfindung ist es vorgesehen, dass als Mittel zur Vergleichmäßigung des Ammoniakdrucks ein mittels Kühlung thermostatisierbarer Kondensatbehälter dient. Hierbei kann von einem Effekt profitiert werden, bei dem über einer Flüssigkeit in einem abgeschlossenen Raum in Abhängigkeit der angelegten Temperatur ein charakteristischer Dampfdruck auftritt. Der Dampfdruck ist weitestgehend unabhängig vom Pegelstand der Flüssigkeit. Umgekehrt bedeutet dies, dass ein Gas, welches unter einem definierten Druck steht, dann auskondensiert, wenn seine Temperatur unter die zu dem vorliegenden Druck gehörige Taupunkttemperatur abgesenkt wird. Wird nun in dem Ammoniak-Bereitstellungssystem eine Kammer in der Art eines Flüssigkeitsspeichers vorgesehen, die auf die Taupunkttemperatur des angestrebten Systemdrucks thermostatisiert ist, so wird dort im Falle eines zu hohen Drucks Ammoniak so lange auskondensiert, bis sich der gewünschte Systemdruck einstellt. Bei günstiger Systemauslegung ist die erreichbare Kondensationsrate so hoch, dass sich ein erhöhter Druck gar nicht erst einstellen kann.

In einer weiteren vorteilhaften Ausgestaltung der Erfindung ist es vorgesehen, dass die Kühlung mittels einer Kühleinheit, insbesondere in Form einer Kompressions-Kältemaschine, Adsorptions-Kältemaschine oder Peltier-Kältemaschine erfolgt. Falls beispielsweise ein Systemdruck von 5 bar absolut angestrebt wird, so muss der Kondensatbehälter auf eine Temperatur von circa 4°C eingestellt werden. Für diese Aufgabe kommt neben den vorgenannten Kältemaschinen prinzipiell jede weitere Kälteanlage in Frage.

Gemäß einer bevorzugten Ausgestaltung der Erfindung ist es vorgesehen, dass die Kühlung des Ammoniaks anhand einer Expansion bei der Dosierung desselben erfolgt. Hierbei kann gänzlich auf eine externe Kühlung verzichtet werden, da die Eigenabkühlung des expandierenden Ammoniaks zur Kühlung des Kondensatraums auf der Hochdruckseite des Systems genutzt wird.

Gemäß einer weiteren bevorzugten Ausgestaltung der Erfindung ist es vorgesehen, dass die Kühlung mittels eines Wärmetauschers, insbesondere einer Verbrennungskraftmaschine eines Kraftfahrzeugs, erfolgt. Hierbei kann auf einfache Weise eine synergetische Wirkverbindung zwischen dem ohnehin vorhandenen Kühlkreislauf des Kraftfahrzeugs und dem Ammoniak-Bereitstellungssystem erzielt werden.

Nach einem vorteilhaften Ausführungsbeispiel der Erfindung ist es vorgesehen, dass als Mittel zur Vergleichmäßigung des Ammoniakdrucks poröse Medien mit einer definierten Porengröße dienen. Möglich ist darüber hinaus auch die Verwendung eines Speichermediums, das ein oder mehrere Salze, insbesondere Chloride und/oder Sulfate eines oder mehrerer Erdalkalimetalle und/oder eines oder mehrerer 3d-Nebengruppenelemente, vorzugsweise Mangan, Eisen, Kobalt, Nickel, Kupfer und/oder Zink, enthält. Der entscheidende physikalische Effekt ist der Phasenübergang des Ammoniaks bei einer definierten Temperatur. Durch den Einsatz der porösen Medien mit definierter Porengröße kann ebenfalls ein Phasenübergang des Ammoniaks von seinem gasförmigen Aggregatzustand zu seinem flüssigen Aggregatzustand mit einer starken Volumenänderung infolge Sorption herbeigeführt werden. Durch die Wahl eines geeigneten Stoffes kann damit die Phasenübergangstemperatur durch eine Wärmeabfuhr gezielt beeinflusst werden, so dass der Zielsystemdruck auch bei einer höheren Temperatur eingestellt werden kann. Hierzu bietet sich im Fahrzeugkontext insbesondere das Temperaturniveau des Motorkühlwassers an, das typischerweise im Bereich von 90°C liegt. Auch das Temperaturniveau eines Fahrzeug-Ölkreislaufs, das im Bereich von 120°C liegt, kann hierbei zum Einsatz kommen. Letztlich ist jedes beliebige Temperaturniveau zu dem vorab beschriebenen Zweck nutzbar, so lange es im Wesentlichen konstant gehalten werden kann. Das dabei benötigte Temperaturniveau wird über die Wahl des porösen Mediums bestimmt, so dass selbst Temperaturen von 100°C, 110°C bishin zu beispielsweise 140°C oder anderer Werte ebenfalls möglich ist.

Entsprechend einer vorteilhaften Ausgestaltung der Erfindung ist es vorgesehen, dass eine Auswahl geeigneter poröser Medien und/oder komplexbildender Salze sowie eine konstante Thermostatisierung derselben auf eine Temperatur größer 20°C, insbesondere Kühlwassertemperatur von 90°C oder Öltemperatur von 120°C, erfolgt. Sofern zum Beispiel ein Systemdruck von 5 bar absolut eingestellt werden soll, muss der Kondensatbehälter bei reinem Ammoniak auf eine Temperatur von circa 4°C temperiert werden. Bei zum Einsatz kommenden Ammoniak-Speichersubstanzen können weitaus höhere Temperaturen zur Erreichung des Zieldrucks angelegt werden. Handelt es sich bei der Ammoniak-Speichersubstanz um Mg (NH₃)₆ Cl₂ kann beispielsweise eine Temperatur angelegt werden, die typischerweise am Abgassystem abgreifbar ist. Ferner können Temperaturniveaus von 65°C und 90°C des Kühlwassersystems nutzbar gemacht werden, indem als Ammoniak-Speichersubstanz Ca (NH₃)₈ Cl₂ beziehungsweise Sr (NH₃)₈ Br₂ Verwendung finden.

Nach einem weiteren vorteilhaften Ausführungsbeispiel der Erfindung ist es vorgesehen, dass als Mittel zur Vergleichmäßigung des Ammoniakdrucks ein Puffer, insbesondere ein Gefäß mit einer federbelasteten, verschieblich gelagerten Wandung oder eine elastische Membran, dient. Der Puffer ist dabei in der Lage, bei dem gewünschten Zieldruck sein Volumen stark zu vergrößern, wobei das Medium Ammoniak in diesem Fall nicht kondensiert wird.

Entsprechend einer bevorzugten Ausführungsvariante der Erfindung ist es vorgesehen, dass als Ammoniak speichernde Substanz Salze, insbesondere Chloride und/oder Sulfate und/oder 3d-Nebengruppenelemente, Adsorber und/oder Ammoniumsalze vorgesehen sind. Die besagten Ammoniak-Speichersubstanzen dienen dazu, Ammoniak durch eine thermische Desorption oder Thermolyse, das heißt Temperatureinwirkung, freizusetzen. Zu den Sulfaten zählen beispielsweise Sulfate eines oder mehrerer Erdalkalielemente, wie Mg oder Ca. Unter den 3d-Nebengruppenelementen können zum Beispiel Mangan, Eisen, Kobalt, Nickel und/oder Zink zum Einsatz kommen. Weiterhin sind organische Adsorber und Ammoniumsalze, wie Ammoniumcarbamat, geeignete Ammoniak-Speichersubstanzen.

Entsprechend einer weiteren bevorzugten Ausführungsvariante der Erfindung ist es vorgesehen, dass eine Aufheizung der Ammoniak speichernde Substanz mittels einer Heizung, insbesondere elektrische Heizung, und/oder mittels Abwärme eines Kühlsystems, insbesondere Wasser- oder Ölkreislauf, der Verbrennungskraftmaschine und/oder mittels Abwärme des Abgassystems erfolgt. Hierbei kann auf bereits in einem Kraftfahrzeug vorhandene Komponenten und Systeme zurückgegriffen werden, so dass sich Synergien durch Doppelfunktionen besagter Fahrzeug-Bestandteile ergeben können.

### Kurze Beschreibung der Zeichnungen

Die Erfindung sowie vorteilhafte Ausgestaltungen gemäß den Merkmalen der weiteren Ansprüche werden im Folgenden anhand der in den Zeichnungen dargestellten Ausführungsbeispiele näher erläutert, ohne dass insoweit eine Beschränkung der Erfindung erfolgt; diese umfasst vielmehr alle Abwandlungen, Änderungen und Äquivalente, die im Rahmen der Ansprüche möglich sind. Es zeigen:
- Figur 1: eine Ausführung der erfindungsgemäßen Vorrichtung mit einem beheizbaren Ammoniakspeicher und einer externen Kälteanlage mit einer aktiven Thermostatisierung in einer schematischen Darstellung; und
- Figur 2: eine weitere Ausführung der erfindungsgemäßen Vorrichtung mit einem beheizbaren Ammoniakspeicher und einer Kühlung per Wärmetauscher in einer schematischen Darstellung.

### Ausführungsform(en) der Erfindung

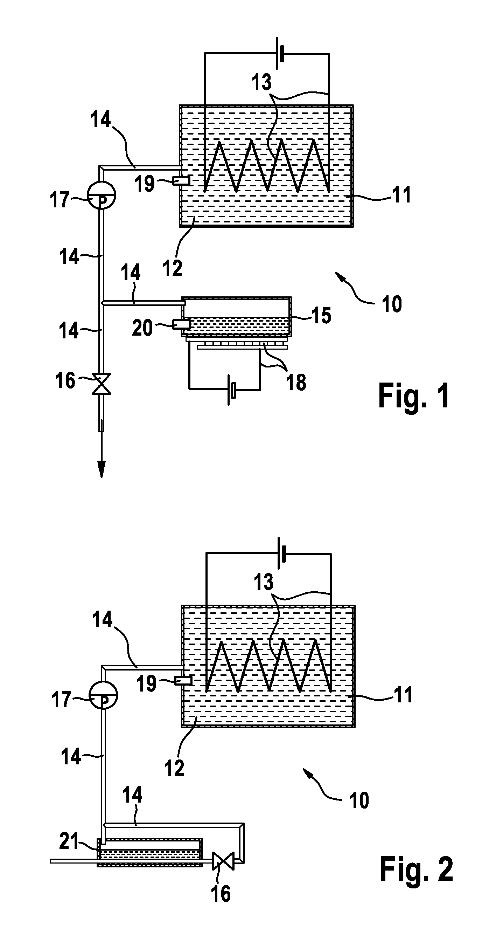

In Figur 1 ist eine Vorrichtung 10 mit einem Ammoniakspeicher 11 gezeigt, der mit einer Ammoniak speichernden Substanz 12 befüllt und mit einer Heizung 13 beheizbar ist. Die Heizung 13 ist gemäß dem vorliegenden Ausführungsbeispiel als elektrische Heizung ausgeführt, kann jedoch auch mittels der Abwärme eines Motorkühlmittels und/oder der Abwärme eines Abgasstranges beziehungsweise Abgassystems einer in einem Kraftfahrzeug angeordneten Verbrennungskraftmaschine betrieben werden. Der durch Aufheizen des festen Speichermediums 12 entstehende gasförmige Ammoniak wird über eine Leitung 14, insbesondere Zuführleitung, einerseits bis zu einem Kondensatbehälter 15 und andererseits bis zu einem elektrisch oder pneumatisch betätigbaren Ventil 16, insbesondere Dosierventil, geleitet. Die Leitung 14 selbst ist zudem mit einem Drucksensor 17 ausgestattet, mit dessen Hilfe die Druckverhältnisse in der Leitung 14 überwacht werden können.

Der kammerartige Kondensatbehälter 15 dient als Pufferspeicher für kondensiertes Ammoniak und ist zu diesem Zweck mit einer Kühleinheit 18 versehen, die entsprechend der Figur 1 als elektrisch versorgtes Peltierelement ausgebildet ist. Abgangsseitig des Ventils 16 ist der nicht dargestellte Abgasstrang anordenbar, der zwischen der nicht gezeigten Verbrennungskraftmaschine und einem nicht dargestellten Katalysator positioniert ist. Die vorliegende Ausführungsform umfasst ferner einen an dem Ammoniakspeicher 11 angeordneten Thermostat 19 und einen an dem Kondensatbehälter 15 platzierten weiteren Thermostat 20 im Sinne einer aktive Thermostatisierung. Hierbei kann auf Grund eines nicht dargestellten Steuergerätes in Verbindung mit dem Drucksensor 17, den beiden Thermostaten 19, 20 sowie dem Ventil 16 eine Steuerung des Ventils 16 derart vorgenommen werden, dass über die Zuführleitung 14 das erzeugte und gegebenenfalls zwischengespeicherte Ammoniak in den Abgasstrang zwischen der Verbrennungskraftmaschine und dem Katalysator zudosiert wird.

In Figur 2 ist eine weitere Ausführungsform der Vorrichtung 10 gezeigt. Auch hierbei weist die Vorrichtung 10 den Ammoniakspeicher 11 auf, der mit der Ammoniak speichernden Substanz 12 befüllt und mit der Heizung 13 beheizbar ist. Die Heizung 13 kann entsprechend dem vorhergehenden Ausführungsbeispiel als elektrische Heizung ausgeführt oder auch mittels der Abwärme eines Motorkühlsystems und/oder der Abwärme des Abgasstranges beziehungsweise Abgassystems der in dem Kraftfahrzeug angeordneten Verbrennungskraftmaschine betrieben werden. Zum Einsatz kommt gleichermaßen die Leitung 14, über welche der durch Aufheizen des festen Speichermediums 12 entstehende gasförmige Ammoniak einerseits bis zu einem Wärmetauscher 21 und andererseits bis zu dem elektrisch oder pneumatisch betätigbaren Ventil 16, insbesondere Dosierventil, geleitet wird. Der Wärmetauscher 21 dient dazu, das Ammoniak für einen Phasenübergang zu kühlen. Die Leitung 14 ist ebenfalls mit dem Drucksensor 17 ausgestattet, mit dessen Hilfe die Druckverhältnisse in der Leitung 14 überwacht werden können.

Abgangsseitig des Ventils 16 ist der nicht dargestellte Abgasstrang anordenbar, der zwischen der nicht gezeigten Verbrennungskraftmaschine und einem nicht dargestellten Katalysator positioniert ist. Die vorliegende Ausführungsform umfasst ferner einen an dem Ammoniakspeicher 11 angeordneten Thermostat 19 im Sinne einer aktive Thermostatisierung. Hierbei kann auf Grund eines nicht dargestellten Steuergerätes in Verbindung mit dem Drucksensor 17, dem Thermostat 19 sowie dem Ventil 16 eine Steuerung des Ventils 16 derart vorgenommen werden, dass über die Zuführleitung 14 das erzeugte und gegebenenfalls zwischengespeicherte Ammoniak in den Abgasstrang zwischen der Verbrennungskraftmaschine und dem Katalysator zudosiert wird.

Die Vorrichtung 10 und das entsprechende Verfahren sind für Ammoniak-Speichersubstanzen geeignet, aus denen Ammoniak durch eine thermische Desorption oder Thermolyse, das heißt Temperatureinwirkung, freigesetzt wird. Geeignete Speichersubstanzen können zum Beispiel Salze sein, insbesondere Chloride und/oder Sulfate eines oder mehrerer Erdalkalielemente, wie MgCl₂ oder CaCl₂, und/oder eines oder mehrerer 3d-Nebengruppenelemente, wie Mangan, Eisen, Kobalt, Nickel, Kupfer und/oder Zink. Weiterhin sind organische Adsorber und Ammoniumsalze, wie zum Beispiel Ammoniumcarbamat, geeignete Ammoniak-Speichersubstanzen, die in der beschriebenen Vorrichtung 10 respektive dem beschriebenen Verfahren eingesetzt werden können. Ammoniak ist eine chemische Verbindung bestehend aus Stickstoff und Wasserstoff mit der Summenformel NH3. Ammoniak ist bekannt als selektives und effizientes Reduktionsmittel für die katalytische Reduktion (SCR) von Stickoxiden in sauerstoffhaltigen Abgasen, insbesondere von Verbrennungskraftmaschinen.

Die Vorrichtung 10 und das entsprechende Verfahren nutzen einen Effekt, wonach sich über einer Flüssigkeit in einem abgeschlossenen Raum in Abhängigkeit der Temperatur ein charakteristischer Dampfdruck einstellt. Der Dampfdruck ist praktisch unabhängig vom Pegel der Flüssigkeit. Umgekehrt bedeutet dies, dass ein Gas, welches unter einem definierten Druck steht, auskondensiert, wenn seine Temperatur unter die zu dem vorliegenden Druck gehörige Taupunkttemperatur abgesenkt wird. Wird nun in dem Ammoniak-Bereitstellungssystem eine Kammer vorgesehen, welche auf die Taupunkttemperatur des angestrebten Systemdrucks thermostatisiert ist, so wird dort im Falle eines zu hohen Drucks Ammoniak so lange auskondensiert, bis sich der gewünschte Systemdruck einstellt. Bei günstiger Systemauslegung ist die erreichbare Kondensationsrate so hoch, dass sich ein erhöhter Druck gar nicht erst einstellen kann.

Falls beispielsweise ein Systemdruck von 5 bar absolut angestrebt wird, so muss der Kondensatbehälter auf eine Temperatur von circa 4°C eingestellt werden. Für diese Aufgabe kommt prinzipiell jede Kälteanlage in Frage, also zum Beispiel eine Kompressionsmaschine, eine Adsorptionsmaschine oder eine Peltierkältemaschine.

Eine Modifikation dieses Konzeptes erlaubt sogar gänzlich auf eine externe Kühlung zu verzichten. in diesem Fall wird die Abkühlung des Ammoniaks während der Expansion im Dosiervorgang genutzt, um den Kondensationsraum auf der Hochdruckseite des Systems zu kühlen.

Der entscheidende physikalische Effekt ist der Phasenübergang des Ammoniaks bei einer definierten Temperatur. Durch Einsatz von porösen Medien mit definierter Porengröße kann ebenfalls ein Phasenübergang mit starker Volumenänderung infolge Sorption herbeigeführt werden. Durch Wahl eines geeigneten Stoffes kann damit die Phasenübergangstemperatur gezielt beeinflusst werden, so dass der Zielsystemdruck auch bei einer höheren Temperatur eingestellt werden kann. Hierbei bietet sich im Fahrzeugkontext insbesondere das Temperaturniveau des Motorkühlwassers an, das typischerweise im Bereich von 90°C liegt.

Sorption ist der Oberbegriff für die Anreicherung eines Stoffes in einem Phasengrenzgebiet, der über die Konzentrationen innerhalb der Phasen hinausgeht. Sorption findet vorrangig an den Grenzflächen zwischen flüssiger und fester, zwischen gasförmiger und fester sowie zwischen flüssiger und gasförmiger Phase statt. Die sorbierende Festphase respektive Grenzfläche ist der Sorbent oder das Sorptionsmittel. Der aufzunehmende, noch nicht sorbierte Stoff wird als Sorptiv bezeichnet, wohingegen der an- oder eingelagerte, also sorbierte Stoff als Sorbat beschrieben wird. Unter der Desorption wird ein Vorgang verstanden, bei dem Atome oder Moleküle die Oberfläche eines Festkörpers verlassen. Die Desorption stellt damit den Umkehrvorgang der Adsorption dar.

Gemäß einer weiteren Ausführungsform ist eine Druckvergleichmäßigung darüber hinaus mit einem Puffer möglich, der in der Lage ist, bei dem gewünschten Zieldruck sein Volumen stark zu vergrößern. Vorsehbar ist hierbei zum Beispiel ein Gefäß mit einer federbelasteten, verschieblich gelagerten Wandung oder eine elastische Membran. Das Medium wird in diesem Fall nicht kondensiert.

Zusammenfassend dient die Vorrichtung 10 zur thermodynamischen und druckaufbauenden Freisetzung von Ammoniak aus der Ammoniak speichernden Substanz 12. Der Vorrichtung 10 stellt einen höheren Ammoniakdruck gegenüber einem Abgasdruck des Abgassystems bereit, in welches das Ammoniak dosiert eingebracht wird. Hierzu kommen Mittel, wie beispielsweise der Kondensatbehälter 15 oder der Wärmetauscher 21 oder der Puffer zur Vergleichmäßigung des Ammoniakdrucks zum Eindruck. Der Zweck der derartigen Vorrichtung 10 besteht darin, Druckspitzen zu vermindern beziehungsweise eine Vergleichmäßigung des Drucks bei der Freisetzung von Ammoniak aus Ammoniak abspaltenden Substanzen zu erwirken. Gegenüber herkömmlichen Vorrichtungen und/oder Systemen werden Druckschwankungen abgebaut, was zu einer erhöhten Dosiergenauigkeit und zu einem vereinfachten sicherheitstechnischen Konzept des Systems führt.

## Patentansprüche

1. Vorrichtung (10) zur thermodynamischen und druckaufbauenden Freisetzung von Ammoniak aus einer Ammoniak speichernden Substanz (12), bei welcher der Ammoniakdruck höher ist als ein Abgasdruck eines Abgassystems, insbesondere einer Verbrennungskraftmaschine, in welches das Ammoniak dosiert einzubringen ist, **dadurch gekennzeichnet, dass** Mittel zur Vergleichmäßigung des Ammoniakdrucks gegeben sind.

2. Vorrichtung (10) nach Anspruch 1, **dadurch gekennzeichnet, dass** als Mittel zur Vergleichmäßigung des Ammoniakdrucks ein mittels Kühlung thermostatisierbarer Kondensatbehälter (15) dient.

3. Vorrichtung (10) nach einem der vorhergehenden Ansprüche, **dadurch gekennzeichnet, dass** die Kühlung mittels einer Kühleinheit (18), insbesondere in Form einer Kompressions-Kältemaschine, Adsorptions-Kältemaschine oder Peltier-Kältemaschine erfolgt.

4. Vorrichtung (10) nach einem der vorhergehenden Ansprüche, **dadurch gekennzeichnet, dass** die Kühlung des Ammoniaks anhand einer Expansion bei der Dosierung desselben erfolgt.

5. Vorrichtung (10) nach einem der vorhergehenden Ansprüche, **dadurch gekennzeichnet, dass** die Kühlung mittels eines Wärmetauschers (21), insbesondere einer Verbrennungskraftmaschine eines Kraftfahrzeugs, erfolgt.

6. Vorrichtung (10) nach einem der vorhergehenden Ansprüche, **dadurch gekennzeichnet, dass** als Mittel zur Vergleichmäßigung des Ammoniakdrucks poröse Medien mit einer definierten Porengröße, insbesondere Zeolithe und/oder Silikagel, dienen.

7. Vorrichtung (10) nach einem der vorhergehenden Ansprüche, **dadurch gekennzeichnet, dass** als Mittel zur Vergleichmäßigung des Ammoniakdrucks komplexbildende Salze, insbesondere Chloride und/oder Sulfate, dienen.

8. Vorrichtung (10) nach einem der vorhergehenden Ansprüche, **dadurch gekennzeichnet, dass** eine Auswahl geeigneter poröser Medien und/oder komplexbildender Salze sowie eine konstante Thermostatisierung derselben auf eine Temperatur größer 20°C, insbesondere Kühlwassertemperatur von 90°C oder Öltemperatur von 120°C, erfolgt.

9. Vorrichtung (10) nach einem der vorhergehenden Ansprüche, **dadurch gekennzeichnet, dass** als Mittel zur Vergleichmäßigung des Ammoniakdrucks ein Puffer, insbesondere ein Gefäß mit einer federbelasteten, verschieblich gelagerten Wandung oder eine elastische Membran, dient.

10. Vorrichtung (10) nach einem der vorhergehenden Ansprüche, **dadurch gekennzeichnet, dass** als Ammoniak speichernde Substanz (12) Salze, insbesondere Chloride und/oder Sulfate und/oder 3d-Nebengruppenelemente, Adsorber und/oder Ammoniumsalze vorgesehen sind.

11. Vorrichtung (10) nach einem der vorhergehenden Ansprüche, **dadurch gekennzeichnet, dass** eine Aufheizung der Ammoniak speichernde Substanz (12) mittels einer Heizung (13), insbesondere elektrische Heizung, und/oder mittels Abwärme eines Kühlsystems der Verbrennungskraftmaschine und/oder mittels Abwärme des Abgassystems erfolgt.

12. Verfahren zur thermodynamischen und druckaufbauenden Freisetzung von Ammoniak aus einer Ammoniak speichernden Substanz (12), bei welcher der Ammoniakdruck höher ist als ein Abgasdruck eines Abgassystems, insbesondere einer Verbrennungskraftmaschine, in welches das Ammoniak dosiert eingebracht wird, **dadurch gekennzeichnet, dass** Mittel zur Vergleichmäßigung des Ammoniakdrucks eingesetzt werden.
